# EUROPEAN PATENT APPLICATION

(11) **EP 2 437 004 A1**
(43) Date of publication of application: **04.04.2012**
(21) Application number: 11180606.3
(22) Date of filing: 08.09.2011
(51) Int. Cl.: F24J 2/52

(54) **Water discharge assembly for a solar panel**

(30) Priority: 01.10.2010 NL 2005437
(71) Applicant: Ubbink B.V., 6984 AA Doesburg (NL)
(72) Inventor: Theunissen, Verius Leo Antonius, 6921 EE DUIVEN (NL); Lavrard Meyer, Michel Georges Florian, 44100 NANTES (FR); Van Schellebeek, Dirk Johannes, 6715 LK EDE (NL)
(74) Representative: Geurts, Franciscus Antonius

(57) **Abstract**

Water discharge assembly (1) for a solar panel placed on a roof structure (9), wherein the solar panel (80) comprises an upper edge, a lower edge and a left edge and right edge, wherein the water discharge assembly (1) is provided with a first cover element (10) having several longitudinal gutters, a second cover element (20) or several longitudinal gutters and a third cover element (30) having a longitudinal gutter, wherein the longitudinal gutter of the third cover element (30) debouches in the gutters of the first cover element (10) and/or the second cover element (20), wherein the cover elements extend underneath and substantially parallel to the left edge, the right edge and the horizontal upper edge, respectively, of the solar panel (80), wherein the first cover element (10) and the second cover element (20) are separated from each other by an intermediate space and only partially cover the pitched roof structure, and wherein the solar panel (80), the third cover element (30) and the first cover element (10) and/or the second cover element (20) are adapted for like a composed water retaining surface keeping off precipitation at the location of the roof structure (9) situated underneath the solar panel (80).

## Description

### BACKGROUND OF THE INVENTION

The invention relates to a water discharge assembly for a solar panel for discharging precipitation from the solar panel.

A known water discharge assembly for a solar panel comprises several guttered plates that are placed in mutual overlap on a pitched, water permeable roof structure. The guttered plates are provided with trapezoidal gutters that are separated from each other by flattened wave tops. The solar panel is mounted on said flattened wave tops by means of an attachment profile. The gutters extend in the pitch direction of the roof structure underneath the solar panel for downstream discharge of precipitation in that direction. The guttered plates cover the full surface of the roof structure below the solar panel in order to prevent that the precipitation, which due to gravity falls from the solar panel in the direction of the roof structure, reaches the water permeable roof structure.

It is an object of the invention to provide a water discharge assembly for a solar panel, wherein the required surface of water retaining guttered plates can be reduced.

### SUMMARY OF THE INVENTION

According to a first aspect the invention provides a water discharge assembly for discharging precipitation from a solar panel placed on a pitched roof structure, wherein the solar panel comprises a horizontal upper edge, a horizontal lower edge and, extending in the pitch direction of the roof structure, a left edge and right edge, wherein the water discharge assembly is provided with an elongated first cover element having one or several longitudinal gutters, an elongated second cover element having one or several longitudinal gutters and an elongated third cover element having one or several longitudinal gutters, wherein the at least one longitudinal gutter of the third cover element debouches in the gutters of the first cover element and/or the second cover element, wherein the first cover element, the second cover element and the third cover element extend underneath and substantially parallel to the left edge, the right edge and the horizontal upper edge, respectively, of the solar panel, wherein the first cover element and the second cover element are separated from each other by an intermediate space and only partially cover the pitched roof structure, and wherein the solar panel, the third cover element, and the first cover element and/or the second cover element are adapted for like a composed water retaining surface keeping off precipitation at the location of the roof structure situated underneath the solar panel. The water discharge assembly may in combination with the solar panel cover the roof structure in a water retaining manner whereas the surface of the roof structure underneath the solar panel only needs to be partially covered in a water retaining manner by cover elements.

In one embodiment the solar panel, the first cover element, the second cover element and the third cover element are adapted for like a composed water retaining surface keeping off precipitation at the location of the roof structure situated underneath the solar panel. The water discharge assembly may in combination with the solar panel cover the roof structure in a water retaining manner whereas the surface of the roof structure underneath the solar panel only needs to be partially covered in a water retaining manner by cover elements.

In one embodiment the solar panel spans the intermediate space between the first cover element and the second cover element. The solar panel may cover the uncovered part of the roof structure underneath the solar panel in a water retaining manner. In that way the necessity for a full cover by cover elements underneath the solar panel can be put an end to.

In one embodiment the first cover element, the second cover element and the third cover element considered in vertical projection, extend underneath the left edge, the right edge and the upper edge, respectively, of the solar panel. By disposing the second cover element and the third cover element vertically or in the direction of gravity underneath the edges of the solar panel, precipitation falling over the edges of the solar panel due to gravity, can be collected in the gutters of the cover elements.

In one embodiment the third cover element extends from the position underneath the upper edge of the solar panel to underneath the lower edge of a similar or identical upstream solar panel situated higher on the pitched roof structure. The third cover element can in that case collect and discharge precipitation falling from the similar or identical solar panel situated upstream. In that way it can be prevented that precipitation from a solar panel situated upstream in the pitch direction penetrates into the roof structure underneath the water discharge assembly of the solar panel situated downstream below it.

In one embodiment the third cover element of the water discharge assembly also discharges precipitation falling from the lower edge of a solar panel that is situated above it upstream in the pitch direction. In that way it can be prevented that precipitation from a solar panel situated upstream in the pitch direction penetrates into the roof structure underneath the water discharge assembly of the solar panel situated downstream below it.

In one embodiment the first cover element and/or the second cover element extend from the position underneath the left edge and the right edge, respectively, of the solar panel to underneath the opposite right edge or the opposite left edge, respectively, of a consecutive adjacent similar or identical solar panel. In that way it can be prevented that precipitation from an adjacent solar panel penetrates into the roof structure underneath the water discharge assembly of the adjacent solar panel.

In one embodiment the first cover element of the water discharge assembly is also the second cover element of an adjacent water discharge assembly underneath an adjacent similar or identical solar panel. In that way the number of required parts for realising water discharge assemblies underneath several adjacent solar panels can be reduced.

In one embodiment the first cover element of the water discharge assembly is placed in partial overlap with the second cover element of a similar or identical water discharge assembly situated adjacent to the water discharge assembly. In that way two adjacent water discharge assemblies can easily be placed at a fixed distance adjacent to and in partial overlap with each other.

In one embodiment the solar panel has a rectangular outer circumference, that is characterised by two longitudinal sides and two cross sides. A rectangular solar panel can have more advantageous sag characteristics than for instance a square solar panel.

In one embodiment the water discharge assembly is provided with attachment elements engaging onto the solar panel, for connecting the solar panel to the roof structure. By means of the attachment elements the solar panel can be connected to the roof structure at a distance from the roof structure, in order to leave room for aeration and electronic components underneath the solar panel.

In one embodiment the attachment elements support the solar panel at the longitudinal sides. As a result the distance between the supports can be chosen smaller than the largest length of the solar panel, which can be more advantageous to the sag characteristics of the solar panel.

In one embodiment the solar panel is placed in upright or portrait orientation on the roof structure, wherein the longitudinal sides are the left edge and right edge of the solar panel. The solar panel placed upright can be connected to the roof structure at the left edge and right edge.

In one embodiment the solar panel is placed in the horizontal or landscape orientation on the roof structure, wherein the longitudinal sides are the horizontal upper edge and lower edge of the solar panel. The solar panel placed horizontally can be connected to the roof structure at the upper edge and lower edge.

In one embodiment the attachment elements comprise tile hooks at the lower side of the solar panel, wherein the tile hooks comprise hook portions facing away from the solar panel and engaging onto the battens arranged on the roof structure. The solar panel can by means of the tile hooks be suspended from the battens on the roof structure in a simple mounting motion and without additional attachment actions.

In one embodiment the attachment elements comprise clamps for clamping the solar panel, wherein the clamps are connected directly to the roof structure or are connected via the gutters. The clamps can provide a larger adjustability when clamping solar panels of different dimensions.

According to a second aspect the invention provides a method of placing a solar panel and a water discharge assembly situated underneath the solar panel on a pitched roof structure, wherein the solar panel comprises a horizontal upper edge, a horizontal lower edge and, extending in the pitch direction of the roof structure, a left edge and right edge, wherein the water discharge assembly is provided with an elongated first cover element having one or several longitudinal gutters, an elongated second cover element having one or several longitudinal gutters and an elongated third cover element having one or several longitudinal gutters, wherein the at least one longitudinal gutter of the third cover element debouches in the gutters of the first cover element and/or the second cover element, wherein the first cover element, the second cover element and the third cover element extend underneath and substantially parallel to the left edge, the right edge and the horizontal upper edge, respectively, of the solar panel, wherein the first cover element and the second cover element are separated from each other by an intermediate space and only partially cover the pitched roof structure, and wherein the solar panel, the third cover element, and the first cover element and/or the second cover element are adapted for like a composed water retaining surface keeping off precipitation at the location of the roof structure situated underneath the solar panel, wherein the method comprises the steps of placing the first cover element underneath the left edge of the solar panel, placing the second cover element underneath a right edge of the solar panel, and placing the third cover element underneath the horizontal upper edge of the solar panel. The water discharge assembly can in combination with the solar panel cover the roof structure in a water retaining manner whereas the surface of the roof structure underneath the solar panel only needs to be partially covered in a water retaining manner by cover elements.

In one embodiment the method comprises the steps of connecting the first cover element and the second cover element to the solar panel, clamping the third cover element between the first cover element, the second cover element and the solar panel, and attaching the solar panel and/or one or several of the cover elements to the roof structure. In this way the water discharge assembly can be largely connected to and positioned with respect to the solar panel prior to placing it on the roof structure.

In one embodiment the water discharge assembly and the solar panel are connected to each other prior to the assembly thereof being placed on the roof boarding. In this way the water discharge assembly can be largely connected to and positioned with respect to the solar panel prior to placing it on the roof structure.

In one embodiment the method comprises the steps of connecting the third cover element to the solar panel, attaching the solar panel and/or the third cover element to the roof structure, and clamping the first cover element and the second cover element between the solar panel and the roof structure. In this way the third guttered plate can already be connected to the solar panel, whereas the first guttered plate and the second guttered plate may already have been arranged on the roof structure.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached schematic drawings, in which:
figure 1 shows an isometric view of a roof structure provided with several water discharge assemblies and solar panels according to the invention;
figure 2A shows an isometric view of a water discharge assembly and a solar panel according to figure 1;
figure 2B shows an isometric view of the water discharge assembly according to figure 2A, wherein the solar panel has been left out;
figure 2C shows a cross-section of the water discharge assembly according to the line IIC-IIC in figure 2A;
figure 2D shows a longitudinal section of the water discharge assembly according to the line IID-IID in figure 2A;
figure 2E shows an enlargement of a detail of the water discharge assembly according to the circle IIE in figure 2D;
figure 3A shows an isometric view of a first alternative embodiment of a water discharge assembly and a solar panel according to the invention;
figure 3B shows an isometric view of the water discharge assembly according to figure 3A, wherein the solar panel has been left out;
figure 3C shows a longitudinal section of the water discharge assembly according to the line IIIC-IIIC in figure 3A;
figure 3D shows a cross-section of the water discharge assembly according to the line IIID-IIID in figure 3A;
figure 3E shows an enlargement of a detail of the water discharge assembly according to the circle IIIE in figure 3D;
figure 4A shows an isometric view of a second alternative embodiment of a water discharge assembly and a solar panel according to the invention;
figure 4B shows an isometric view of the water discharge assembly according to figure 4A, wherein the solar panel has been left out;
figure 4C shows a cross-section of the water discharge assembly according to the line IVC-IVC in figure 4A;
figure 4D shows a right-hand side view of the water discharge assembly according figure 4A;
figure 4E shows an enlargement of a detail of the water discharge assembly according to the circle IVE in figure 4C;
figure 5A shows an isometric view of a third alternative embodiment of a water discharge assembly and a solar panel according to the invention;
figure 5B shows an isometric view of a water discharge assembly according to figure 5A, wherein the solar panel has been left out;
figure 5C shows a bottom view of the water discharge assembly according to figure 5A;
figure 5D shows a cross-section of the water discharge assembly according to the line VD-VD in figure 5A; and
figure 5E shows an enlargement of a detail of the water discharge assembly according to the circle VE in figure 5D.

### DETAILED DESCRIPTION OF THE DRAWINGS

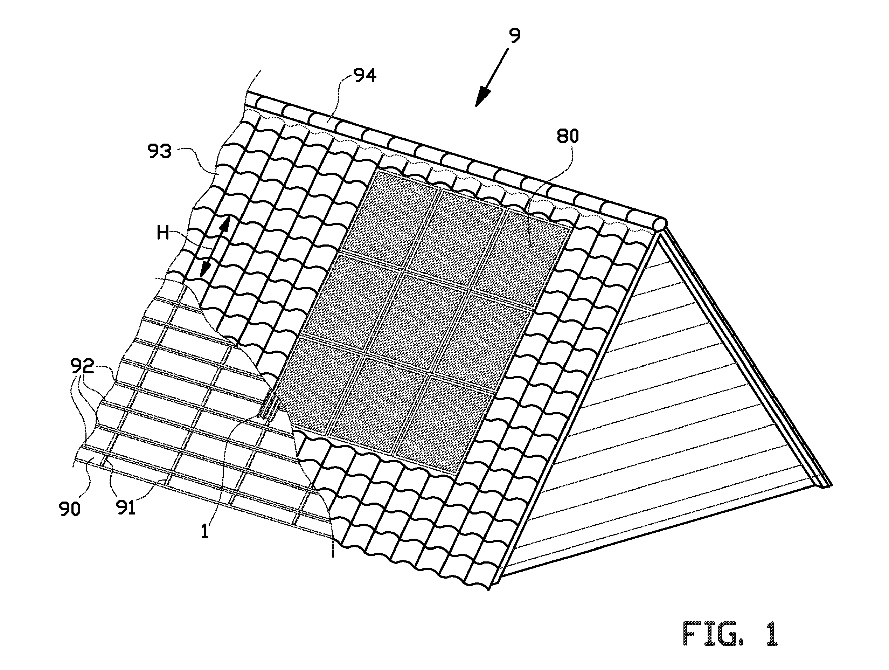

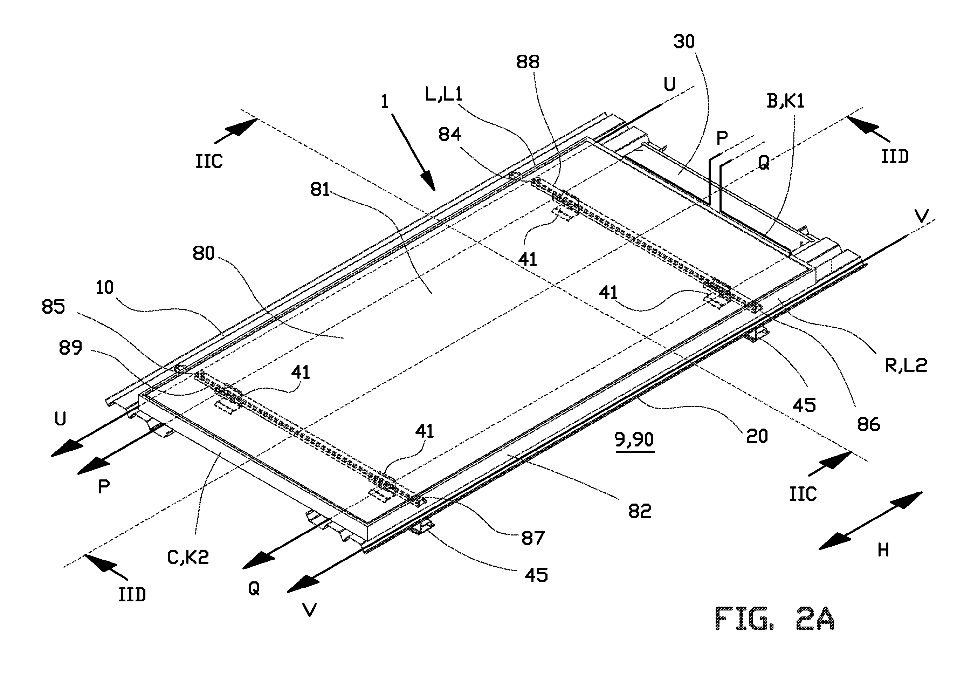

Figure 1 shows water discharge assemblies 1 for discharging precipitation from a roofing 8 of rectangular solar panels 80 situated over the water discharge assemblies 1. Figures 2A-E, 3A-E, 4A-E and 5A-E show different exemplary embodiments 1, 101, 201 and 301 of the water discharge assembly which each in a specific manner compensate for variations in the dimensions of the solar panels and the orientation of the solar panels with respect to the roof structure. In the description of the figures below, first of all the general principles of how the water discharge assemblies 1, 101, 201 and 301 work will be gone into on the basis of the water discharge assembly 1 shown in figure 1 and figures 2A-E. Subsequently the specific characteristics of the various embodiments of the water discharge assemblies 1, 101, 201 and 301 will be described.

As shown in figure 1 the water discharge assemblies 1 and the roofing 8 are arranged on a pitched roof structure 9 of a building, for instance a gable roof of a house. The pitched roof structure 9 is provided with a roof boarding 90 that is substantially not adapted to be water retaining, a roof boarding 90 that is substantially not water retaining or a water permeable roof boarding 90 of for instance wooden boards. The roof structure 9 may additionally be provided with a lattice of wooden counter battens 91 extending in the pitch direction H of the roof structure 9 over the roof boarding 90 and wooden battens 92 extending horizontally over the roof boarding 90. Alternatively the roof structure 9 can also only consist of a lattice of wooden counter battens 91 and wooden battens 92.

The rectangular solar panels 80 each comprise a rectangular plate 81. The main surfaces of the plates 81 are placed in several rows and/or columns adjacent to each other at a mutual intermediate distance of approximately two centimetres in a common plane substantially parallel to the plane of the pitched roof structure 9. The solar panels 80 extend over a part or the entire surface of the pitched roof structure 9. In this example the roofing 8 furthermore comprises tiles 93 and lead flashings 94 that bound the solar panels 80 all round in order for in cooperation with the solar panels 80 and the water discharge assembly 1 forming a water retaining roofing 8.

In this example the rectangular plate 81 is provided with photovoltaic cells 84 at the side facing upwards for generating electricity. "Solar panel" however, here also means a solar collector for heating water or another panel suitable for collecting solar energy and converting it into usable energy for a building or a house.

As shown in figure 2A the rectangular outer circumference of the rectangular solar panel 80 is characterised by a first long longitudinal side L1, a second long longitudinal side L2, a first short cross side K1 and a second short cross side K2. The solar panel 80 is mounted to the roof structure 9 with the plate 81 substantially parallel to the plane of the roof structure 9 in upright or landscape orientation of the solar panel 80.

In the upright orientation of the solar panel 80, as shown in figure 2A, the longitudinal sides L1 an L2 extend in the pitch direction H of the pitched roof structure 9, as a result of which the longitudinal sides L1 and L2 in this orientation can also be referred to as the left edge L and the right edge R, respectively, of the solar panel 80. The cross sides K1 and K2 extend horizontally over the roof structure 9, transverse to the longitudinal sides L1 and L2. The cross sides K1 and K2 can in this orientation be referred to as an upper edge B and a lower edge C, respectively.

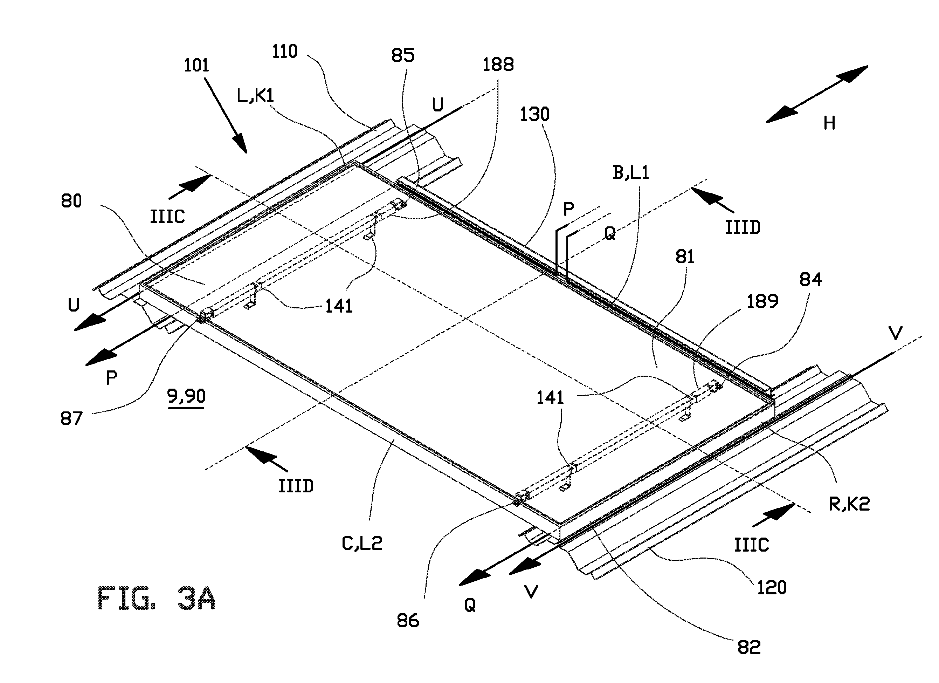

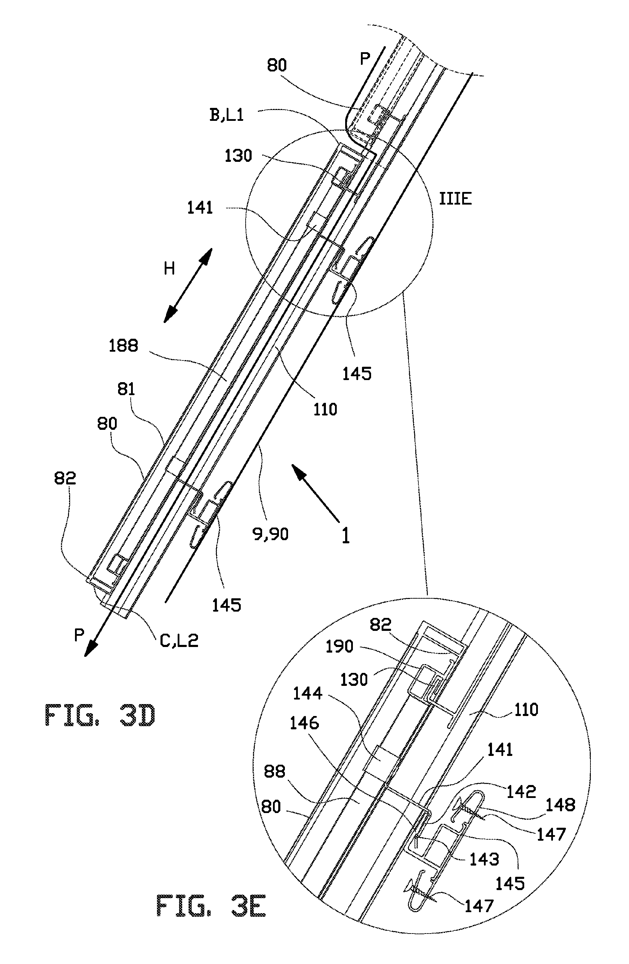

In the landscape orientation of the solar panel 80, as shown in figure 3A, the longitudinal sides L1 an L2 extend horizontally, as a result of which the longitudinal sides L1 and L2 in this orientation can also be referred to as the upper edge B and the lower edge C, respectively, of the solar panel 80. The cross sides K1 and K2 in this case extend in the pitch direction H of the pitched roof structure 9 and in this orientation can be referred to as the left edge L and the right edge R, respectively.

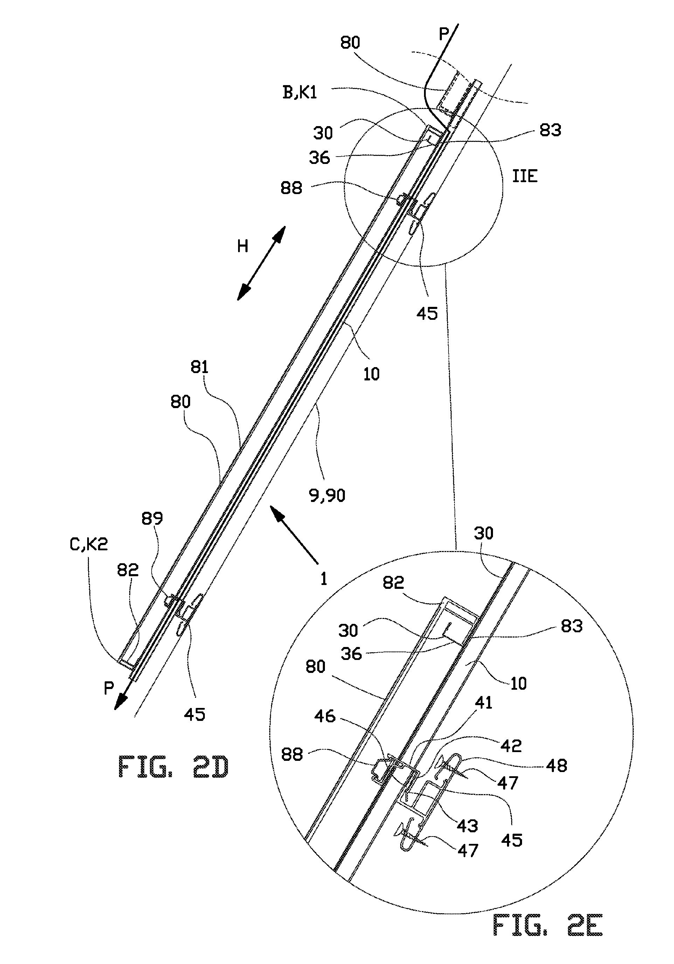

Each solar panel 80 is provided with an aluminium circumferential frame 82 surrounding the circumference of the rectangular plate 81. As shown in figure 2E, the circumferential frame 82 is provided at the lower side of the rectangular plate 81 with an end wall 83 extending inwards along the lower side of the rectangular plate 81. As shown in figure 2A, the circumferential frame 82 is in this example provided at the longitudinal sides L1, L2 of the solar panel 80, with four attachment holes 84-87 arranged in the end wall 83, for in the attachment holes 84-87 underneath the main surface of the plate 81 supporting the solar panel 80 on the roof structure 9. In that way advantageous sag characteristics of the solar panel 80 are realised under the influence of its own weight or external influences, for instance by snow or wind.

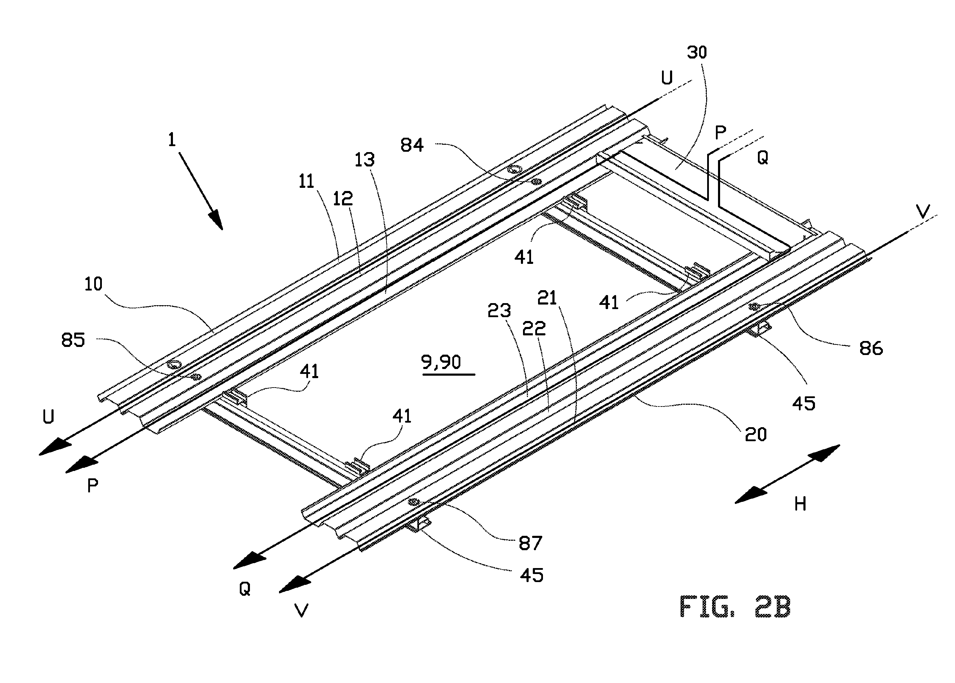

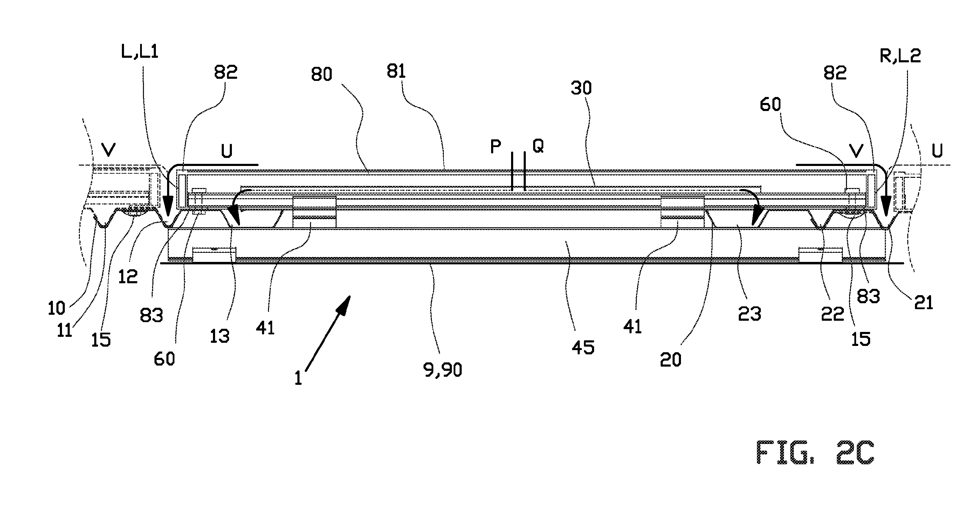

As shown in figures 2A and 2B the water discharge assembly 1 per solar panel 80 comprises an elongated first cover element or guttered plate 10, an elongated second cover element or guttered plate 20 and an elongated third cover element or guttered plate 30. The first guttered plate 10 and the second guttered plate 20 are manufactured from thin metal sheets, which considered in cross-section, have been shaped into a sheet piling profile. The sheet piling profile, as shown in cross-section in figure 2C, in this example therefore comprises several substantially trapezoidal gutters which have each been provided with a flattened wave valley which on both sides merges into inclined sheet piling. The gutters extend over the full length in the longitudinal direction of the first guttered plate 10 and the second guttered plate 20 for in that direction discharging precipitation downstream. The third guttered plate 30 is in this example manufactured from a thin metal sheet that is provided with a bent, upright end edge 36, which considered in cross-section of figure 2C, is situated at the downstream longitudinal side of the third guttered plate 30. The third guttered plate 30 thus bounds a gutter extending horizontally in the longitudinal direction of the third guttered plate 30. The height of the gutters of the guttered plates 10, 20, 30 are chosen such that large quantities of precipitation can be discharged through the gutters without the precipitation flowing over the upright edges of the gutters during discharge.

The first guttered plate 10 and the second guttered plate 20 are situated spaced apart from each other on both sides of the solar panel 80 and extend parallel to and straight below the left edge L and the right edge R, respectively, of the solar panel 80. Between the first guttered plate 10 and the second guttered plate 20 there is a free intermediate space as a result of which the roof structure 9 situated in between or its roof boarding 90 underneath the solar panel 80 is exposed or not covered by guttered plates. The third guttered plate 30 is situated transverse to the first guttered plate 10 and the second guttered plate 20 and extends parallel to and straight below the horizontal upper edge B of the solar panel 80. The gutter of the third guttered plate 30 on both sides debouches into the gutters of the first guttered plate 10 and the second guttered plate 20 for via flow paths P and Q discharging precipitation from a solar panel 80 situated upstream therefrom. For a proper discharge of water it is of importance that the guttered plates 10, 20, 30 in the direction of gravity are situated substantially vertically underneath the corresponding edges of the solar panel 80.

In an alternative embodiment that is not shown, the water discharge assembly 1 is provided with a fourth guttered plate, which for an identical or similar water discharge assembly situated downstream on the roof structure 9 can have perform the same function as the third guttered plate 30 has for the water discharge assembly 1 described above. Said fourth guttered plate may also serve as end gutter for the discharge of precipitation from a lowermost water discharge assembly 1 placed on the roof structure.

As shown in figure 2D the first guttered plate 10 and the second guttered plate 20 project in the longitudinal direction beyond the upper edge B of the solar panel 80. The first and second guttered plates 10, 20 of a water discharge assembly 1 situated above it, shown in dots, can be placed on the projecting outer ends of the first and second guttered plates 10, 20, so that continuations of the flow paths U, V shown in figures 2A and 2B, are realised in the pitch direction H of the roof structure 9. The first guttered plates 10 and the second guttered plates 20 of the consecutive water discharge assemblies 1 are then basically overlapping each other like tiles on a roof.

Depending on the landscape or upright orientation of the solar panel 80 with respect to the roof structure 9, the attachment holes 84-87 are at the left and right longitudinal sides L;L1, R;L2 which extend either in the pitch direction H as shown in figure 2A or at the horizontal upper and lower longitudinal sides B;L1, C;L2 of the solar panel 80 as shown in figure 3A. In that case an alternative embodiment of the water discharge assembly is required, which is provided with attachment means that are adapted for engaging the plate of the solar panel at the upper edge B and the lower edge C at the location of the attachment holes or the desired attachment position.

The dimensions of the solar panel, the number of attachment holes and the shape of and the position of the attachment holes of a solar panel are not always known for a certain project, for instance when a water discharge assembly is delivered separate from a deviating solar panel. A certain degree of adjustability is then required, which can be realised by making use of clamps to be further described, which are able to clamp a plate of a deviating solar panel at the location of the attachment holes or attachment positions chosen for said plate.

Figures 2A-E, 3A-E, 4A-E and 5A-E show examples of the embodiments mentioned above, which will be discussed in detail below.

Figures 2A-2E show the embodiment of the water discharge assembly 1 with the solar panel 80, of which the dimensions are known beforehand, in upright orientation, as already described in general above. In figure 2B the solar panel 80 has been left out in order to make the water discharge assembly 1 situated underneath visible.

As shown in the cross-section in figure 2C, the first guttered plate 10 is connected by means of bolt and nut connections 14 via the attachment holes 84, 85 to the left edge L of the solar panel 80. The first guttered plate 10 is provided with a first gutter 11, a second gutter 12 and a third gutter 13, that are situated consecutively adjacent to each other. The first gutter 11 extends beyond the circumference of the solar panel 80 to which the first guttered plate 10 is attached. The second gutter 12 is situated underneath the part of the circumferential frame 82 at the left edge L of the solar panel 80 and as such via flow path U collects precipitation falling from the left edge L of the solar panel 80. The third gutter 13 crosses in the longitudinal direction thereof with the left outer end of the third guttered plate 30 and as such via the flow path P collects the precipitation that is discharged horizontally via the gutter in the third guttered plate 30. The flattened wave top separating the first gutter 11 from the second gutter 12, is provided with recess 15.

The second guttered plate 20 is connected by means of bolt and nut connections 60 via the attachment holes 86, 87, to the right edge R of the solar panel 80. The second guttered plate 20 is provided with a fourth gutter 21, a fifth gutter 22 and a sixth gutter 23 that are situated consecutively adjacent to each other. The fourth gutter 21 extends beyond the circumference of the solar panel 80 to which the second guttered plate 20 is attached. The fifth gutter 22 is situated underneath the part of the circumferential frame 82 at the right edge R of the solar panel 80 and as such via flow path V collects precipitation falling from the right edge R of the solar panel 80. The sixth gutter 23 crosses in the longitudinal direction thereof with the right outer end of the third guttered plate 30 and as such via the flow path Q collects the precipitation that is discharged horizontally via the gutter in the third guttered plate 30.

As shown in figures 2A and 2B, the first guttered plate 10 and the second guttered plate 20 at the location of the attachment holes 84-87 extend underneath the longitudinal sides L1, L2 of the solar panel 80, as a result of which direct mounting of the solar panel 80 from the attachment holes 84-87 on the roof structure 9 is impeded by the first and second guttered plates 10, 20 or the third guttered plate 30. The water discharge assembly 1 is therefore provided with two coupling profiles 88, 89 as shown in figure 2B, running parallel to the cross sides K1, K2, and situated fully within the rectangular circumference of the solar panel 80. With their outer ends the coupling profiles 88, 89 are connected by means of the bolt and nut connections 60 via the attachment holes 84-87 to the circumferential frame 82 at the opposing longitudinal sides L1 and L2. Spaced apart from the attachment holes 84-87, adjacent to the guttered plates 10, 20, 30 the coupling profiles 88, 89 are provided with a total of four tile hooks 41, one near each corner of the solar panel 80, which at a first outer end are connected to the coupling profiles 88, 89. As shown in figure 2E at a second outer end facing away from the solar panel 80, each tile hook 41 is provided with a hook portion 42. The hook portion 42 is provided with a flexible locking lip 43.

The water discharge assembly 1 is furthermore provided with aluminium battens 45 that are placed in mounting profiles 48 on the roof structure 9. By means of for instance screws 47, the mounting profiles 48 are horizontally arranged on the roof boarding 90, on the wooden counter battens 91 and/or on the wooden battens 92 of the roof structure 9, which at the location of the attachment holes 84-87 extend horizontally underneath the solar panel 80. Optionally the aluminium batten 45 and the mounting profiles 48 can be integrally formed. At an outer end facing away from the roof structure 9 the aluminium battens 45 are provided with a hook edge 46. With their locking lips 43, the hook portions 42 of the tile hooks 41 can easily be snapped behind the hook edges 46 of the aluminium battens 45, as a result of which the tile hooks 41 and the aluminium battens 45 hook into each other and form a hooked connection between the solar panel 80 and the roof structure 9. As the tile hooks 41 are situated underneath and within the circumference of the solar panel 80, it regards blind mounting of the solar panel 80 to the roof structure 9.

In figure 2C the second guttered plate 20 of an adjacent water discharge assembly 1 and the related adjacent solar panel 80 are shown in dots. The second guttered plate 20 of the adjacent water discharge assembly 1 is placed in partial overlap with the first guttered plate 10, wherein the third gutter 21 and the fourth gutter 22 of the adjacent water discharge assembly 1 coincide with the first gutter 11 and the second gutter 12, respectively, of the first guttered sheet 10. The sheet thickness of the metal sheet from which the guttered plates 10, 20 have been formed allow some deformation of the gutters, as a result of which they can be placed with the wave tops and the wave valleys in mutual abutment in each other. The recess 15 in the first guttered plate 10 provides room to the bolt and nut connection 60 falling thereon of the second guttered plate 20 of the adjacent water discharge assembly 1.

With the flat back portion extending in the pitch direction H, the horizontal third gutter 30 abuts the portion of the circumferential frame 82 at the upper edge B of the solar panel 80 and is clamped in between the circumferential frame 82 and the first and the second guttered plate 10, 20.

The method of placing the water discharge assembly 1 comprises the steps of attaching the tile hooks 41 to the coupling profiles 88, 89, arranging the coupling profiles 88, 89 underneath the solar panel 80, placing the first guttered plate 10 underneath the lower edge L of the solar panel 80, placing the second guttered plate 20 underneath the right edge R of the solar panel 80, by means of the bolt and nut connections 60 connecting the first guttered plate 10, the second guttered plate 20 and the coupling profiles 88, 89 to the end wall 83 of the solar panel 80, and placing the third guttered plate 30 underneath the horizontal upper edge B of the solar panel 80. Subsequently the third guttered plate 30 is clamped in between the first guttered plate 10, the second guttered plate 20 and the solar panel 80. These steps can take place prior to placing the water discharge assembly 1 on the roof structure, for instance at ground level. On the roof the mounting profiles 48 are screwed onto the roof boarding 90 or the wooden battens 92, after which the battens 45 are snapped into the mounting profiles 48. Finally the solar panel 80 with the tile hooks 41 attached thereto are suspended from the battens 45 placed on the roof structure 9.

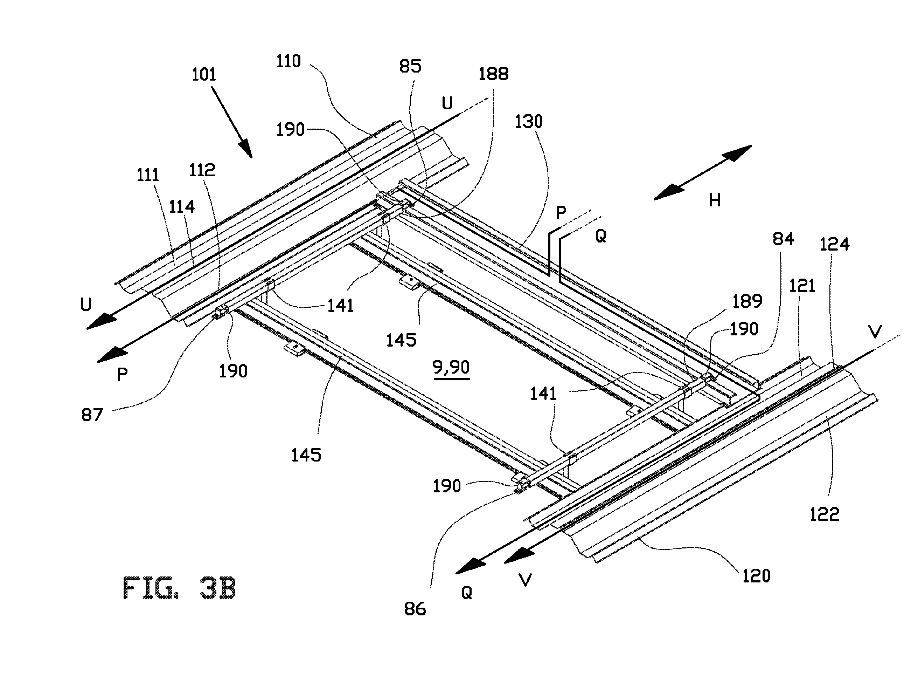

Figures 3A-3E show the first alternative embodiment of the water discharge assembly 101 with the solar panel 80 of figure 1-2E. Although the dimensions of said solar panel are known beforehand, the rectangular solar panel 80 is in this case placed in landscape orientation on the roof structure 9. In figure 3B the solar panel 80 has been left out in order to make the alternative water discharge assembly 101 situated underneath visible.

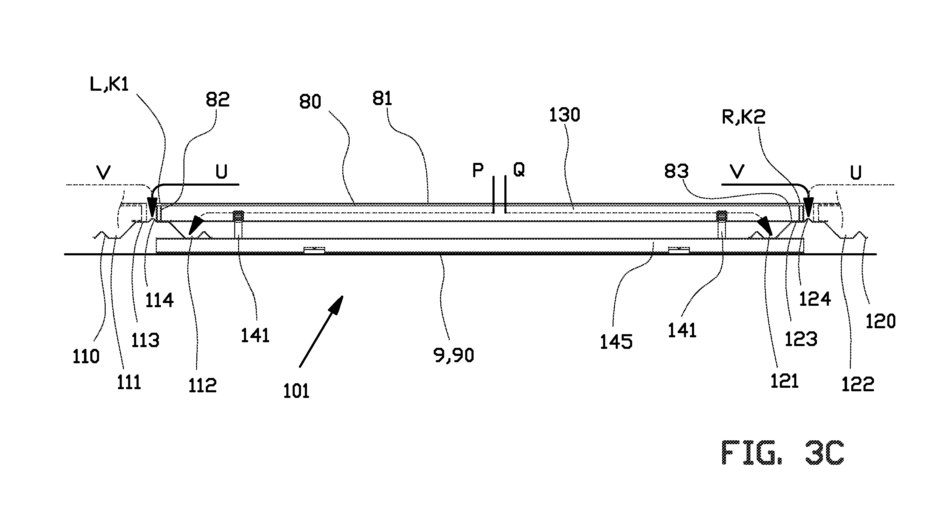

As shown in the longitudinal section in figure 3C, the first guttered plate 110 is provided with a first gutter 111, a second gutter 112 and a wave top 113 in between them having an upright index edge 114. The first gutter 111 extends beyond the circumference of the solar panel 80 to which the first guttered plate 110 is attached. The second gutter 112 in the longitudinal direction thereof crosses with the left outer end of the third guttered plate 130 and as such via the flow path P collects the precipitation that is horizontally discharged via the gutter in the third guttered plate 130. The wave top 113 is situated against the lower edge of the circumferential frame 82 at the left edge L of the solar panel 80 and together with the circumferential frame 82 bounds the flow path U for the precipitation falling from the left edge L of the solar panel 80. In the placed condition the index edge 114 abuts the circumferential frame 82 at the left edge L of the solar panel 80.

In figure 3C an adjacent solar panel 80 is shown in dots. The first gutter 111 of the first guttered plate 110 in the longitudinal direction thereof crosses with the right outer end of the third guttered plate of the adjacent solar panel 80 and as such collects the precipitation that is horizontally discharged via the gutter in the third guttered plate 130 of the adjacent solar panel 80. In the placed condition the index edge 114 of the first guttered plate 110 abuts the circumferential frame at the right edge R of the adjacent solar panel 80. The wave top 113 of the guttered plate 110 together with the circumferential frame of the adjacent solar panel 80 bounds the flow path V for the precipitation falling from the right edge of the adjacent solar panel 80.

In this example the second guttered plate 120 at the right edge R of the solar panel 80 is also the first guttered plate 110 of the adjacent solar panel 80 and therefore identical to the first guttered plate 110 at the left edge L of the solar panel 80. The second guttered plate 120 is placed in the same manner underneath the right edge R of the solar panel 80 and the left edge L of the adjacent solar panel 80 shown in dots.

As shown in figures 3A and 3B the horizontal third gutter 130 extends underneath the circumferential frame 82 situated at the upper edge B of the solar panel 80 at the location of the attachment holes 84-85 present there. The third gutter 130 thus impedes direct mounting from the attachment holes 84, 85 to the roof structure 9. The water discharge assembly 101 is therefore provided with two alternative coupling profiles 188, 189, as shown in figure 3B, that run parallel to the cross sides K1, K2. With their outer ends the coupling profiles 188, 189 are connected by means of bolt and nut connections 60 to the attachment holes 84-87 of the opposing longitudinal sides L1 and L2. The coupling profiles 188, 189 are provided with a bridge portion 190 extending from the gutter of the third guttered plate 130 over the edge of the C-profile of the third guttered plate 130, after which the coupling profile 188, 189 continues outside of the gutter of the third guttered plate 130 towards the other longitudinal side L2 of the solar panel 80. At the other longitudinal side L2 the coupling profiles 188, 189 are provided with a comparable bridge portion 190 which at that location has the same function as with the third guttered plate 130 of an adjacent water discharge assembly 101 that is not shown.

Spaced apart from the attachment holes 84-87, adjacent to the guttered plates 110, 120, 130 the coupling profiles 188, 189 are provided with four alternative tile hooks 141, one near each corner of the solar panel 80, which at a first outer end are connected to the coupling profiles 188, 189 by means of an elongated bush 144 fitting around the coupling profile 188, 189. As shown in figure 3E, at a second outer end facing away from the solar panel 80, each tile hook 141 is provided with a hook portion 142. The hook portion 142 is provided with a flexible locking lip 143.

The water discharge assembly 101 is furthermore provided with aluminium battens 145 that are placed in mounting profiles 148 on the roof structure 9. By means of for instance screws 147, the mounting profiles 148 are horizontally arranged on the roof boarding 90, on the wooden counter battens 91 and/or on the wooden battens 92 of the roof structure 9, which at the location of the attachment holes 84-87 extend horizontally underneath the solar panel 80. Optionally the aluminium batten 145 and the mounting profiles 148 can be integrally formed. At an outer end facing away from the roof structure 9 the aluminium battens 145 are provided with a hook edge 146. With their locking lips 143, the hook portions 142 of the tile hooks 141 can easily be snapped behind the hook edges 146 of the aluminium battens 145, as a result of which the tile hooks 141 and the aluminium battens 145 hook into each other as an assembly and form a hooked connection between the solar panel 80 and the roof structure 9. As the tile hooks 141 are situated underneath and within the circumference of the solar panel 80, it regards blind mounting of the solar panel 80 to the roof structure 9.

The method of placing the water discharge assembly 101 comprises the steps of attaching the tile hooks 141 to the coupling profiles 188, 189, arranging the alternative coupling profiles 188, 189 underneath the solar panel 80, placing the third guttered plate 130 underneath the horizontal upper edge B of the solar panel 80 and by means of the bolt and nut connections 60 connecting the third guttered plate 130 and the coupling profiles 188, 189 to the end wall 183 of the solar panel 80 at the location of the attachment holes 84, 85. These steps can take place prior to placing the water discharge assembly 101 on the roof structure, for instance at ground level. On the roof the mounting profiles 148 are screwed onto the roof boarding 90 or the wooden battens 92, after which the battens 145 are snapped into the mounting profiles 148. Subsequently the first guttered plate 110 and the second guttered plate 120 are globally pre-positioned underneath the left edge L and the right edge R, respectively, of the solar panel 80 to be placed. Finally the solar panel 80 with the tile hooks 141 attached thereto are suspended from the battens 145 placed on the roof structure 9. The first guttered plate 110 and the second guttered plate 120 are now clamped in between the third guttered plate 130 and the roof structure 9. When placing several water discharge assemblies 101 adjacent to each other, one first guttered plate 110 at the left side L of the solar panel 80 will suffice, as the first guttered plate 110 between two adjacent solar panels 80 also forms the second guttered plate 120 of the water discharge assembly 101 of the adjacent solar panel 80. Only the water discharge assembly 101 underneath the last solar panel 80 of a row of solar panels 80 needs to be provided with both a first guttered plate 110 and a second guttered plate 120 to close off said row.

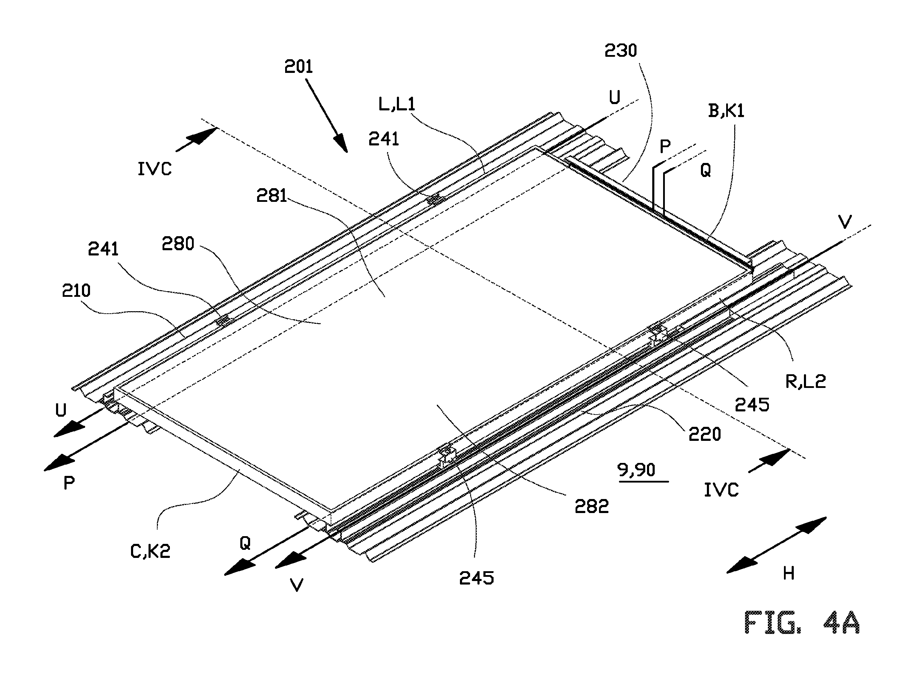

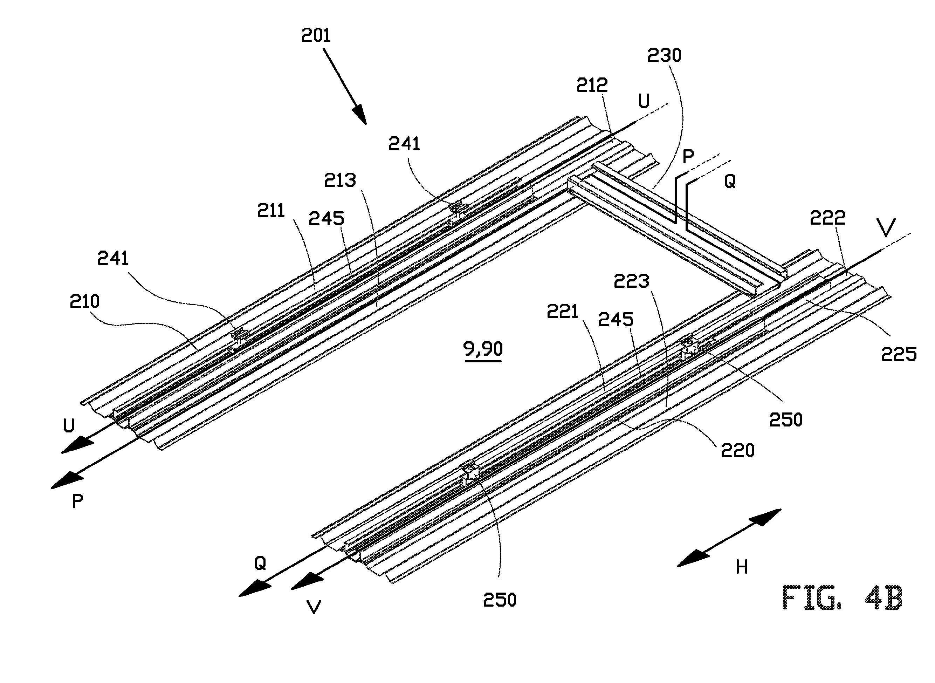

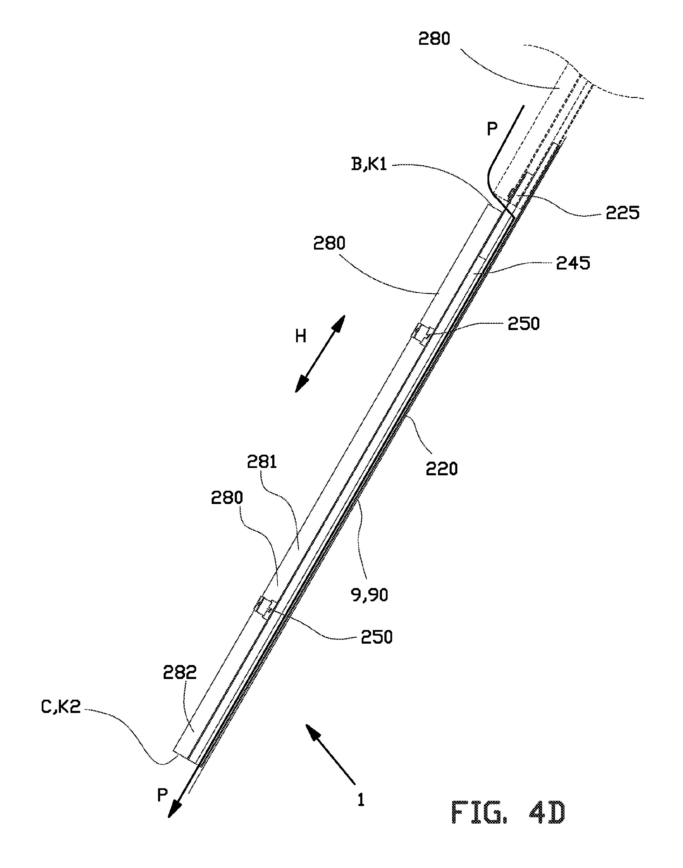

Figures 4A-4E show the second alternative embodiment of the water discharge assembly 201 having a rectangular solar panel 280 in upright orientation, wherein the dimensions of the solar panel are unknown beforehand. Apart from the deviating dimensions and possibly deviating positions, shape and number of attachment holes, the solar panel 280 as regards structure can substantially be compared with the structure of the solar panel 80 as described on the basis of figures 1, 2A-E and 3A-E. In figure 4B the solar panel 280 has been left out in order to make the water discharge assembly situated underneath visible.

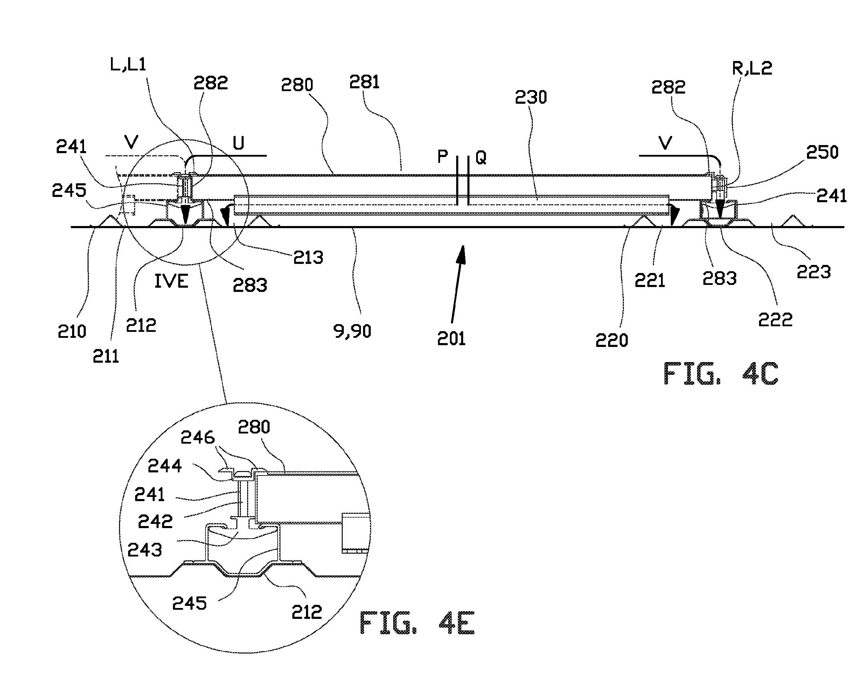

As shown in the cross-section in figure 4C, the first guttered plate 210 is provided with a first gutter 211, a second gutter 212 and a third gutter 213 that are situated consecutively adjacent to each other. The first gutter 211 extends beyond the circumference of the solar panel 280 to which the first guttered plate 210 is attached. The second gutter 212 is situated underneath the part of the circumferential frame 282 at the left edge L of the solar panel 280 and as such via flow path U collects the precipitation falling from the left edge L of the solar panel 280. The third gutter 213 in the longitudinal direction thereof crosses with the left outer end of the third guttered plate 230 and as such via the flow path P collects the precipitation that is horizontally discharged via the gutter in the third guttered plate 230.

In this example, at the right edge R of the solar panel 280 the second guttered plate 220 is identical to the first guttered plate 210 at the left edge L of the solar panel 280. The second guttered plate 220 is placed in the same manner underneath the right edge R of the solar panel 280.

In this example the first guttered plate 210 is also the second guttered plate 220 of an adjacent solar panel 280 shown in dots and therefore identical to the second guttered plate 220 at the right edge R of the solar panel 280. The first guttered plate 210 is placed in the same manner underneath the right edge R of the solar panel 280 and the left edge L of the solar panel 280.

As shown in figures 4C and 4E, the water discharge assembly 201 is provided with clamp support profiles 245 that extend in the pitch direction H through the two gutters 212, 222. The water discharge assembly 201 is furthermore provided with intermediate clamps 241 and end clamps 250. Each intermediate clamp 241 comprises a first clamping body 243 that is situated within the clamp support profile 245 and a second clamping body 244 that is provided with two clamping lips 246 for on both sides of the intermediate clamp 241 engaging onto the circumferential frame 282 of two adjacent solar panels 280. The first clamping body 243 and the second clamping body 244 are connected to each other by a screw connection 242, which at rotation about the longitudinal axis thereof move in an internally threaded hole in the first clamping body 243. As a result the distance between the first clamping body 243 and the second clamping body 244 becomes smaller and a solar panel of an unknown size in height of the circumferential profile 282 can be clamped in between them.

The end clamp 250 is of a similar structure, apart from the fact that it only comprises one clamping lip 246 for at only one edge, for instance at the end of the roofing of solar panels 280, clamping the last solar panel 280. The end clamp 250 is provided with a support at the side where there is no clamping lip, in order to distribute the clamping forces proportionally over the end clamp 250.

As shown in figure 4B the horizontal third gutter 230 is formed out of a metal sheet into a C-profile with a flat back. The end edges facing each other of the C-profile on both sides are suspended from the end edges 283 of the circumferential frames 282 of two adjacent solar panels 280.

The method of placing the water discharge assembly 201 comprises the steps of arranging the first guttered plate 210 and the second guttered plate 220 on the roof structure 9 underneath the left edge L and the right edge R, respectively, of the solar panel 280 to be placed. With the end edge of the C-profile the third guttered plate 230 is suspended from the circumferential profile 282 of the solar panel 280. Subsequently the solar panel 280 is placed in the intermediate clamps 241 and/or end clamps 250. Finally the intermediate clamps 241 and/or end clamps 250 are tightened in order to clamp the solar panel 280 with a clamping force.

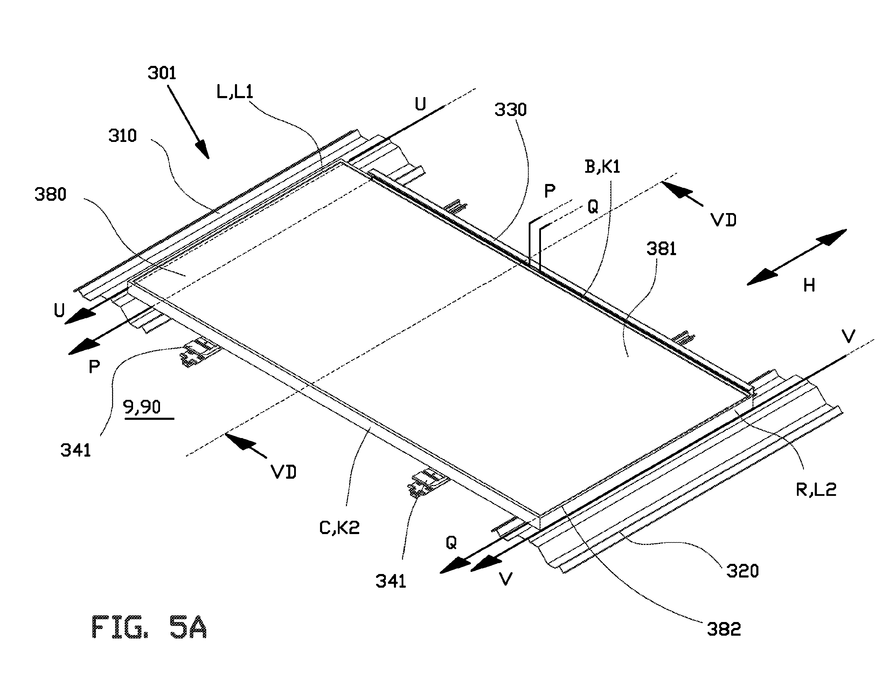

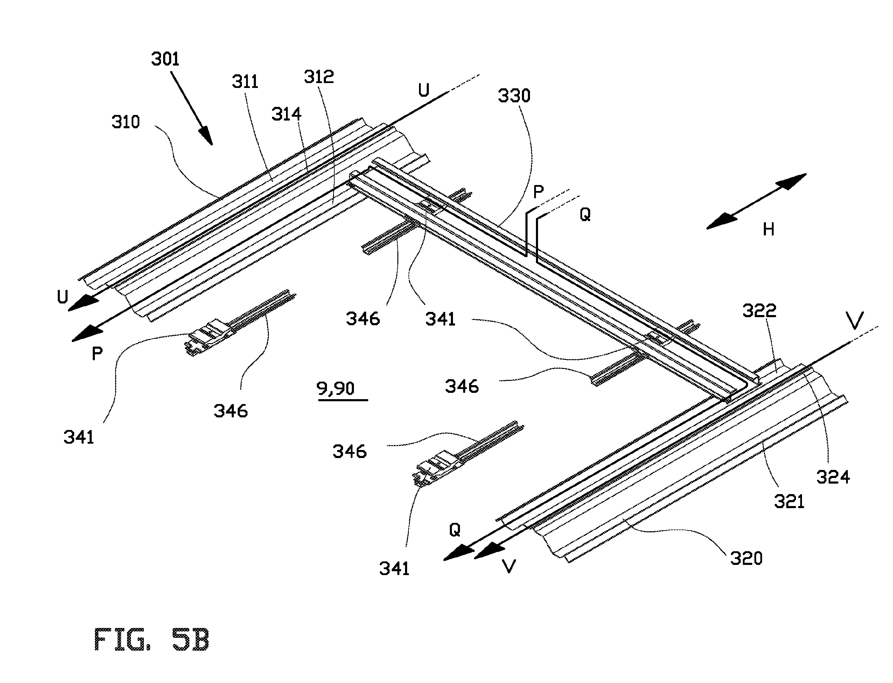

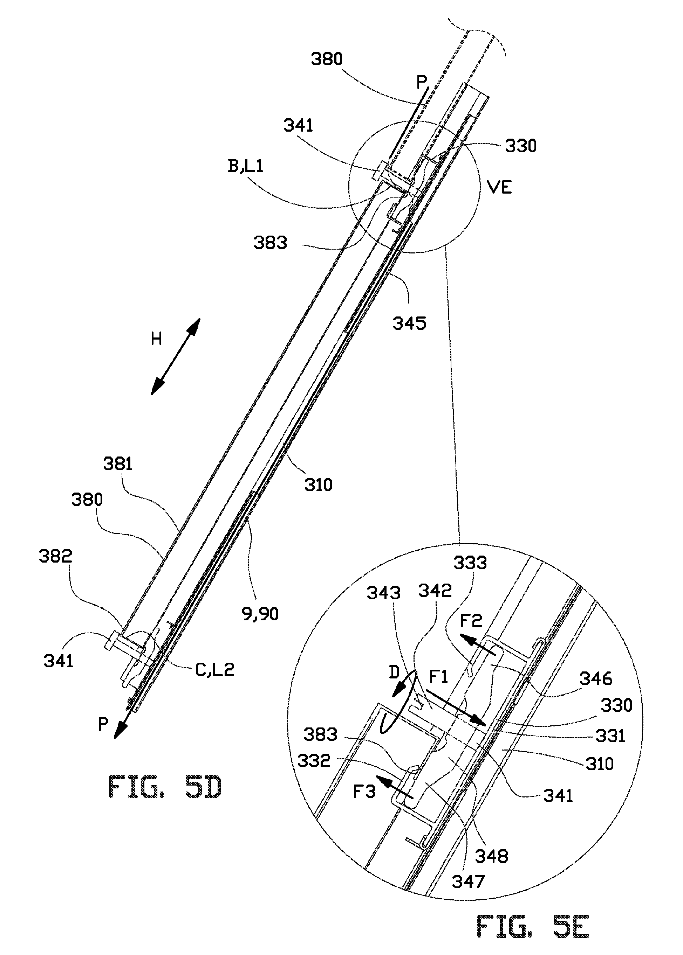

Figures 5A-E show the third alternative embodiment of the water discharge assembly 301 having a rectangular solar panel 380 in landscape orientation, wherein the dimensions of the solar panel 380 are unknown beforehand. Apart from the deviating dimensions and possibly deviating positions, shape and number of attachment holes, the solar panel 380 as regards structure can substantially be compared with solar panel 80 as described on the basis of figures 1, 2A-E and 3A-E. In figure 5B the solar panel 380 has been left out in order to make the water discharge assembly 301 situated underneath visible.

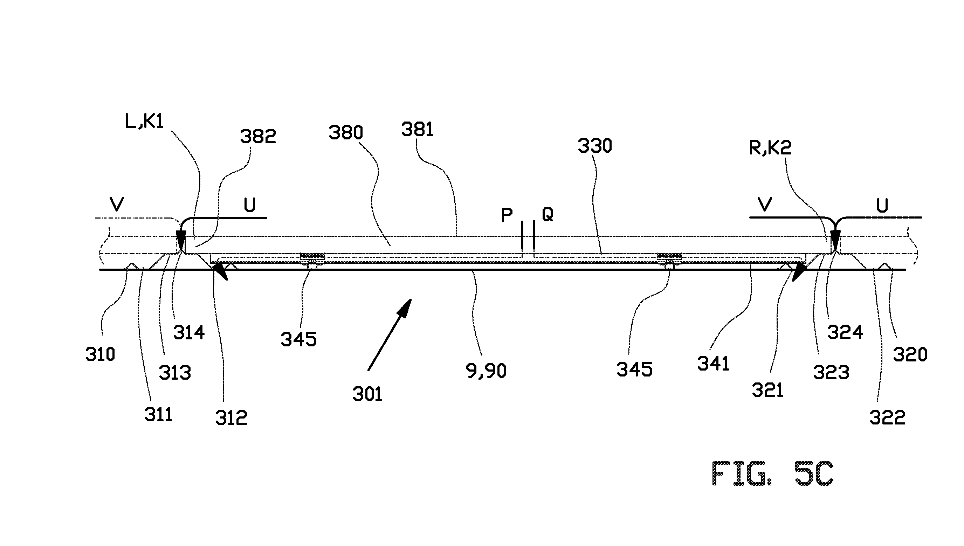

As shown in the longitudinal section in figure 5C, the first guttered plate 310 is provided with a first gutter 311, a second gutter 312 and a wave tip 313 in between them having an upright index edge 314. The first gutter 311 extends beyond the circumference of the solar panel 380 to which the first guttered plate 310 is attached. The second gutter 312 in the longitudinal direction thereof crosses with the left outer end of the third guttered plate 330 and as such via the flow path P collects the precipitation that is horizontally discharged via the gutter in the third guttered plate 330. The wave top 313 is situated against the lower edge of the circumferential frame 382 at the left edge L of the solar panel 380 and together with the circumferential frame 382 bounds the flow path U for the precipitation falling from the left edge L of the solar panel 380. In the placed condition the index edge 314 abuts the circumferential frame 382 at the left edge L of the solar panel 380.

In figure 5C an adjacent solar panel 380 is shown in dots. The first gutter 311 of the first guttered plate 310 in the longitudinal direction thereof crosses with the right outer end of the third guttered plate of the adjacent solar panel 380 and as such collects the precipitation that is horizontally discharged via the gutter in the third guttered plate 330 of the adjacent solar panel 380. In placed condition the index edge 314 of the first guttered plate 310 abuts the circumferential frame at the right edge R of the adjacent solar panel 380. The wave top 313 of the guttered plate 310 together with the circumferential frame of the adjacent solar panel 380 bounds the flow path V for the precipitation falling from the right edge of the adjacent solar panel 380.

In this example the second guttered plate 320 at the right edge R of the solar panel 380 is also the first guttered plate 310 of the adjacent solar panel 380 and therefore identical to the first guttered plate 310 at the left edge L of the solar panel 380. The second guttered plate 320 is placed in the same manner underneath the right edge R of the solar panel 380 and the left edge L of the adjacent solar panel 380 that is shown in dots.

As shown in figure 5B the horizontal third gutter 330 is formed out of an aluminium extrusion profile having a C-shaped cross-section with a flat back. The end edges 332, 333 facing each other of the C-profile on both sides are suspended from the end edges 383 of the circumferential frames 382 of two adjacent solar panels 380. The water discharge assembly 301 is provided with mounting profiles 345 extending in the pitch direction H which are mounted with for instance screws onto the roof structure 9. The third guttered plate 330 is secured onto these mounting profiles 345. The horizontal third gutter 330 extends underneath the circumferential frame 382 situated at the upper edge B of the solar panel 380 at the location of the attachment positions present there at the longitudinal side L1 of the solar panel 380. The third gutter 330 thus impedes direct mounting from the attachment positions to the roof structure 9.

At the location of the attachment positions at the longitudinal side L1 of the solar panel 380, the water discharge assembly 301 is therefore provided with push-off clamps 341 for via the third guttered plate 330 secured via the mounting profiles 345 on the roof structure 9, connecting the solar panel 380 to the roof structure 9. As shown in figures 5C and 5E the push-off clamp 341 is placed in the third guttered plate 330. The push-off clamp 341 comprises a clamping body 348 which with a first outer end 346 and a second outer end 347 abut the end edges 333, 332, respectively, of the C-profile. The clamping body 348 is provided with a screw body 342 having a recess 343 at its outer end, for instance a socket head or crosshead, for accommodating tightening tools. At rotation about its longitudinal axis the screw body 342 moves in direction D in a hole in the clamping body 348 that is provided with internal thread. The screw body 342 moves in the direction of the flat back portion 331 of the C-profile and, once arrived there, clamps with a pressure force F1 against the surface thereof. The clamping body 348 moves upwards in response thereto until it abuts the end edges 383 and pushes itself off against them. At the location of the abutment the clamping body 348 clamps the two end edges 383 with a clamping force F2, F3, respectively, in between the clamping body 348 and the end edges 332, 333 of the C-profile. As a result a solar panel, irrespective of the size in height of the circumferential profile 382, can be adjustably clamped onto the end edge 383 of the circumferential profile 382. As the crew body 342 is situated underneath the upper side of the solar panel 380, it regards blind mounting of the solar panel 380.

The method of placing the water discharge assembly 301 comprises the steps of globally prepositioning the first guttered plate 310 and the second guttered plate on the roof structure 9 underneath the left edge L and the right edge R, respectively, of the solar panel 380 to be placed. Subsequently the clamp support profiles 345 are arranged on the roof structure 9. The third guttered plate 330 with the push-off clamps 341 already arranged therein is secured onto the clamp support profiles 345. Subsequently the solar panel 380 is placed in the push-off clamps 341. Finally the push-off clamps 341 are tightened in order to clamp the solar panel 380 onto the end edge 383 of the circumferential frame 382 with a clamping force.

Preferably the solar panels 80, 280, 380 are supported at the location of the Bessel points of the rectangular plate 81, 281, 381. The four Bessel points of a rectangular plate are at approximately one-fourth and three-fourth of the length of the longitudinal sides L1, L2 of said plate. Supporting the rectangular plate 81, 281, 381 in said four Bessel points provides a stable support of the solar panel 80, 280, 380 on the roof structure 9, wherein the solar panel 80, 280, 380 when sagging under its own weight or in case of sagging due to external conditions such as snow or wind, deforms to a minimal extent. Although it is desirable to support solar panels in these Bessel points, the embodiments described above will have shown that in practice this will not always be the case.

The above description is included to illustrate the operation of preferred embodiments of the invention and not to limit the scope of the invention. Starting from the above explanation many variations that fall within the spirit and scope of the present invention will be evident to an expert.

For instance figures 2A-5E show tile hooks, battens and clamps as the solutions for attaching a solar panel to a roof structure. Said solutions are interchangeable per embodiment. For instance the solar panel 80 having dimensions that are known beforehand can also be secured by means of clamps and the solar panels having dimensions that are unknown beforehand can also be secured by means of tile hooks or battens. In the latter case the tile hooks will preferably be slidable in the longitudinal direction of the solar panel into the correct attachment position or the correct attachment hole, for instance by means of rails that are not further shown.

In an alternative embodiment that is not shown, the guttered plates 10, 20, 110, 120, 210, 220, 310, 320, 410 and 420 extending in the pitch direction H of the roof structure 9 of water discharge assemblies 1, 101, 201, 301, 401 consecutive in the pitch direction H can also be designed per guttered plate as a long guttered plate extending over the full length of the roofing 8.

## Claims

1. Water discharge assembly for discharging precipitation from a solar panel placed on a pitched roof structure, wherein the solar panel comprises a horizontal upper edge, a horizontal lower edge and, extending in the pitch direction of the roof structure, a left edge and right edge, wherein the water discharge assembly is provided with an elongated first cover element having one or several longitudinal gutters, an elongated second cover element having one or several longitudinal gutters and an elongated third cover element having one or several longitudinal gutters, wherein the at least one longitudinal gutter of the third cover element debouches in the gutters of the first cover element and/or the second cover element, wherein the first cover element, the second cover element and the third cover element extend underneath and substantially parallel to the left edge, the right edge and the horizontal upper edge, respectively, of the solar panel, wherein the first cover element and the second cover element are separated from each other by an intermediate space and only partially cover the pitched roof structure, and wherein the solar panel, the third cover element, and the first cover element and/or the second cover element are adapted for like a composed water retaining surface keeping off precipitation at the location of the roof structure situated underneath the solar panel.

2. Water discharge assembly according to claim 1, wherein the solar panel, the first cover element, the second cover element and the third cover element are adapted for like a composed water retaining surface keeping off precipitation at the location of the roof structure situated underneath the solar panel.

3. Water discharge assembly according to claim 1 or 2, wherein the solar panel spans the intermediate space between the first cover element and the second cover element.

4. Water discharge assembly according to any one of the preceding claims, wherein the first cover element, the second cover element and the third cover element considered in vertical projection, extend underneath the left edge, the right edge and the upper edge, respectively, of the solar panel.

5. Water discharge assembly according to any one of the preceding claims, wherein the third cover element extends from the position underneath the upper edge of the solar panel to underneath the lower edge of a similar or identical upstream solar panel situated higher on the pitched roof structure, wherein preferably the third cover element of the water discharge assembly also discharges precipitation falling from the lower edge of a solar panel that is situated above it upstream in the pitch direction.

6. Water discharge assembly according to any one of the preceding claims, wherein the first cover element and/or the second cover element extend from the position underneath the left edge and the right edge, respectively, of the solar panel to underneath the opposite right edge or the opposite left edge, respectively, of a consecutive adjacent similar or identical solar panel.

7. Water discharge assembly according to claim 6, wherein the first cover element of the water discharge assembly is also the second cover element of an adjacent water discharge assembly underneath an adjacent similar or identical solar panel.

8. Water discharge assembly according to claim 6, wherein the first cover element of the water discharge assembly is placed in partial overlap with the second cover element of a similar or identical water discharge assembly situated adjacent to the water discharge assembly.

9. Water discharge assembly according to any one of the preceding claims, wherein the solar panel has a rectangular outer circumference, **characterised by** two longitudinal sides and two cross sides.

10. Water discharge assembly according to any one of the preceding claims, provided with attachment elements engaging onto the solar panel, for connecting the solar panel to the roof structure.

11. Water discharge assembly according to claim 9 and 10, wherein the attachment elements support the solar panel at the longitudinal sides.

12. Water discharge assembly according to claim 10 or 11, wherein the attachment elements comprise tile hooks at the lower side of the solar panel, wherein the tile hooks comprise hook portions facing away from the solar panel and engaging onto the battens arranged on the roof structure, or wherein the attachment elements comprise clamps for clamping the solar panel, wherein the clamps are connected directly to the roof structure or are connected via the gutters.

13. Method of placing a solar panel and a water discharge assembly situated underneath the solar panel on a pitched roof structure, wherein the solar panel comprises a horizontal upper edge, a horizontal lower edge and, extending in the pitch direction of the roof structure, a left edge and right edge, wherein the water discharge assembly is provided with an elongated first cover element having one or several longitudinal gutters, an elongated second cover element having one or several longitudinal gutters and an elongated third cover element having one or several longitudinal gutters, wherein the at least one longitudinal gutter of the third cover element debouches in the gutters of the first cover element and/or the second cover element, wherein the first cover element, the second cover element and the third cover element extend underneath and substantially parallel to the left edge, the right edge and the horizontal upper edge, respectively, of the solar panel, wherein the first cover element and the second cover element are separated from each other by an intermediate space and only partially cover the pitched roof structure, and wherein the solar panel, the third cover element, and the first cover element and/or the second cover element are adapted for like a composed water retaining surface keeping off precipitation at the location of the roof structure situated underneath the solar panel, wherein the method comprises the steps of placing the first cover element underneath the left edge of the solar panel, placing the second cover element underneath a right edge of the solar panel, and placing the third cover element underneath the horizontal upper edge of the solar panel.

14. Method according to claim 13, comprising the steps of connecting the first cover element and the second cover element to the solar panel, clamping the third cover element between the first cover element, the second cover element and the solar panel, and attaching the solar panel and/or one or several of the cover elements to the roof structure, wherein preferably the water discharge assembly and the solar panel are connected to each other prior to the assembly thereof being placed on the roof boarding.

15. Method according to claim 13, comprising the steps of connecting the third cover element to the solar panel, attaching the solar panel and/or the third cover element to the roof structure, and clamping the first cover element and the second cover element between the solar panel and the roof structure.
